(19) Europäisches Patentamt / European Patent Office / Office européen des brevets

(11) EP 4 502 019 A1

(12) EUROPEAN PATENT APPLICATION
published in accordance with Art. 153(4) EPC

(43) Date of publication:
05.02.2025 Bulletin 2025/06

(21) Application number: 23774656.5

(22) Date of filing: 13.03.2023

(51) International Patent Classification (IPC):
C08J 5/18 (2006.01)  B29C 61/06 (2006.01)
C08J 7/00 (2006.01)  C08J 7/052 (2020.01)
G09F 3/04 (2006.01)

(52) Cooperative Patent Classification (CPC):
B29C 61/06; C08J 5/18; C08J 7/00; C08J 7/052;
G09F 3/04

(86) International application number:
PCT/JP2023/009699

(87) International publication number:
WO 2023/182059 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.03.2022 JP 2022050491

(71) Applicant: TOYOBO CO., LTD.
Osaka-shi, Osaka 530-0001 (JP)

(72) Inventor: ISHIMARU, Shintaro
Inuyama-shi, Aichi 484-8508 (JP)

(74) Representative: Vossius & Partner
Patentanwälte Rechtsanwälte mbB
Siebertstrasse 3
81675 München (DE)

(54) HEAT-SHRINKABLE POLYESTER FILM

(57) [Problem] To provide a heat-shrinkable polyester film that has high heat seal strength at low temperature and a high heat shrinkage ratio in the width direction, and that can have compatibility with an automated machine and demonstrate environmental responsiveness. [Solution] A heat-shrinkable polyester film comprising an ethylene terephthalate unit as a main component, wherein the film satisfies the following requirements (1) to (4): (1) a loop stiffness in a width direction of the film is 6 mN/25mm or more and 200 mN/25mm or less; (2) a heat shrinkage ratio in the width direction of the film by immersion in hot water at 80°C for 10 seconds is 20% or more and 70% or less; (3) when one surface and the other surface of the film is heat sealed at a temperature of 140°C at a pressure of 0.1 MPa for 1 second, a strength by shear lap peeling test in the width direction of the film is 20 N/15mm or more and 80 N/15mm or less; and, (4) at least one topmost surface layer has a wetting tension of 40 mN/m or more and 55 mN/m or less.

[FIG. 3]

Direction of shear lap peeling

Bonded portion

Direction of shear lap peeling

**Description**

TECHNICAL FIELD

The present invention relates to a heat-shrinkable polyester film having high heat sealability, and to a label and a packaged product using the same. Specifically, the present invention relates to a heat-shrinkable polyester film suitable for an annular label for a noodle container found in a convenience store, especially to a heat-shrinkable polyester film that demonstrates environmental responsiveness and that has high compatibility with automated fitting machine.

BACKGROUND ART

In recent years, stretched films (so-called heat-shrinkable films) made from polyvinyl chloride resins, polystyrene resins, or polyester resins have been widely used for label packaging that enables protection of glass and PET bottles as well as representation of products, and for banding packaging and banding label that fasten bento containers used in convenience stores with lids. Among the heat-shrinkable films, polyvinyl chloride films have low heat resistance and generate hydrogen chloride gas and dioxins when incinerated. Polystyrene films have disadvantages of low solvent resistance and the need for specially formulated inks for printing. Further, polystyrene films need incineration at high temperatures, and a large amount of black smoke with an offensive odor is generated during incineration. Hence, heat-shrinkable polyester films have been widely used for shrinkable labels because of their high heat resistance, easy incineration, and high solvent resistance, and the usage of the heat-shrinkable polyester films have been increased.
In recent years, handling of pre-cooked noodle products such as udon and ramen has been increasing in convenience stores. When a pre-cooked content such as a noodle is packaged, the content is placed in a deep plastic container, then the container is closed with a lid from above, and the container and the lid are fastened by an annular-shaped shrinkable film from top to bottom (so-called "banding label packaging"). As the heat-shrinkable polyester film, a heat-shrinkable polyester film that is highly shrinkable in the width direction has been widely used. When the film is used as a bottle label film or a banding label for a lunchbox, the film is first formed into an annular shape, then a bottle or a bento container is covered with the annular label, and the annular label is heat shrunk into a banding label. An example of an annular label production may include unwinding a shrinkable film from a film roll, cutting the unwound film along the width direction, and bonding two edges of the cut film together. A step of bonding the edges of the film (producing annular label) will be done in parallel with a step of covering an object (for example, a noodle container) with the film in many cases. The resulting annular shaped film is then heat shrunk with hot air to form a banding label for fitting to an object and fastening a container with a lid.
The heat-shrinkable film used for a banding label has important characteristic of followability to a container when shrunk, and the heat-shrinkable film is also required to have a characteristic that enables uneasy peeling of a bonded portion. Heat sealing, in which the film itself bonds, has been widely employed as a bonding method. Conventional approaches to prevent peeling of the heat sealed portion include increasing the heat seal strength or reducing shrinkage stress.
For example, Patent Document 1 discloses a heat-shrinkable polyester film that is formed from the monomer that can be amorphous components and that stretches in the longitudinal direction of a film roll. However, the film in Patent Document 1 does not have a heat seal strength required by the current technical standards. In recent years, equipment has been accelerated to improve a yield of a banding label, resulting in a short in heat sealing time. Accordingly, the film is required to have high heat seal strength at a lower heat seal temperature.
Patent Document 2 discloses a uniaxially stretched film in which the uniaxial stretching allows the film to have increased heat seal strength by reducing the degree of plane orientation and to have reduced shrinkage stress, thereby preventing the heat sealed portion of the film from peeling off. Since the film in Patent Document 2 is a uniaxially stretched film, the final area stretching ratio (stretching ratio in the longitudinal direction $\times$ stretching ratio in the transverse direction) of the film becomes low, and the film's productivity has room for improvement. As pointed out in Patent Document 2, if the productivity is improved by employing biaxial stretching, peeling of a sealed portion will be inevitable due to a decreased heat seal strength and an increased shrinkage stress.
In addition, a heat-shrinkable film used for a banding label is required to have conflicting characteristics of thickness reduction and stiffness. Regarding the thickness reduction, there is a growing demand from all companies in the supply chain including retailers and food manufacturers as well as from consumers for eliminating as much packaging material as possible. Meanwhile, the automation of food packaging equipment has been significantly advanced to address labor shortages and improve efficiency in recent years, and films have been required to have compatibility with automated machines. The compatibility of the banding label for an automated machine includes a characteristic whether the machine's arms can grip the film properly, or a characteristic whether the film will not flap on a banding label production line that moves at high speed in a step of cutting the film along the width direction and heat sealing the cut film into an annular shape. These characteristics are closely related to the film stiffness. There is a dilemma that the film stiffness, i.e.,

the compatibility with an automated machine will decrease with a decrease in film thickness.

Patent Document 3 discloses application of a predetermined surface treatment to improve alkali removable properties when laminating an alkali-removable ink on the film. Unfortunately, this technique only slightly improves heat sealability and is not effective enough.

CITATION DOCUMENTS

PATENT DOCUMENT

Patent Document 1: JP-B2-4411556
Patent Document 2: JP-B2-6988440
Patent Document 3: JP-A-2004-139067

NON-PATENT DOCUMENT

Non-Patent Document 1: A. Mahendrasingam et al "Effect of draw ratio and temperature on the strain induced crystallization of poly (ethylene terephthalate) at fast draw rates" Polym., vol. 40, p. 5556, 1999.

SUMMARY OF THE INVENTION

PROBLEMS TO BE SOLVED BY THE INVENTION

The present invention has been done against the above background, and it is an object of the present invention to provide a heat-shrinkable polyester film that has high heat seal strength at low temperature and a high heat shrinkage ratio in the width direction, and that can have compatibility with an automated machine and demonstrate environmental responsiveness.

SOLUTION TO THE PROBLEMS

The present inventors have studied to solve above problems. The present invention has the following features.

1. A heat-shrinkable polyester film comprising an ethylene terephthalate unit as a main component, wherein the film satisfies the following requirements (1) to (4):

(1) a loop stiffness in a width direction of the film is 6 mN/25mm or more and 200 mN/25mm or less;
(2) a heat shrinkage ratio in the width direction of the film by immersion in hot water at 80°C for 10 seconds is 20% or more and 70% or less;
(3) when one surface and the other surface of the film is heat sealed at a temperature of 140°C at a pressure of 0.1 MPa for 1 second, a strength by shear lap peeling test in the width direction of the film is 20 N/15mm or more and 80 N/15mm or less; and,
(4) at least one topmost surface layer has a wetting tension of 40 mN/m or more and 55 mN/m or less.

2. The heat-shrinkable polyester film according to 1., wherein the film has a reversing heat capacity difference of 0.4 J/g·K or more and 1.4 J/g·K or less by measurement from 25°C to 140°C with a temperature-modulated differential scanning calorimeter.

3. The heat-shrinkable polyester film according to 1. or 2., wherein the at least one topmost surface of the film has a percentage of oxygen atom present on the film surface of 27% or more and 31% or less based on a peak intensity between 285 eV and 290 eV in a C1s spectrum by Electron Spectroscopy for Chemical Analysis.

4. The heat-shrinkable polyester film according to any one of 1. to 3., wherein the film has a thickness of 20 μm or more and 50 μm or less.

5. The heat-shrinkable polyester film according to any one of 1. to 4., wherein the film comprises one or more selected from the group consisting of isophthalic acid, neopentyl glycol, 1,4-cyclohexanedimethanol, butanediol, and diethylene glycol in an amount of 1 mol% or more and 30 mol% or less as a constituent component of a polyester for the film.

6. The heat-shrinkable polyester film according to any one of 1. to 5., wherein the film comprises a mechanically and/or chemically recycled polyester raw material from a collected PET bottle as a raw material for the film.

7. An annular label, comprising,

the heat-shrinkable polyester film according to any one of 1. to 6. at least in part, and
a bonded portion adhering the heat-shrinkable polyester film to itself, or the heat-shrinkable polyester film to another film,
wherein a strength of the bonded portion by shear lap peeling test is 20 N/15mm or more and 80 N/15mm or less.

ADVANTAGEOUS EFFECTS OF THE INVENTION

According to the present invention, a heat-shrinkable polyester film that has a high heat seal strength at low temperature and a high heat shrinkage ratio in the width direction, and that has compatibility with an automated machine and demonstrate environmental responsiveness can be provided.

BRIEF DESCRIPTION OF DRAWING

[FIG. 1] FIG. 1 is a schematic diagram illustrating single-stage stretching in the transverse stretching with a tenter.
[FIG. 2] FIG. 2 is a schematic diagram illustrating three -stage stretching in the transverse stretching with a tenter.
[FIG. 3] FIG. 3 is a schematic diagram illustrating the direction of a shear lap peeling test for measuring the heat seal strength.

DESCRIPTION OF EMBODIMENTS

1. Polyester raw materials for heat-shrinkable polyester film

A polyester for the heat-shrinkable polyester film of the present invention contains an ethylene terephthalate unit as a main constituent component. The amount of the ethylene terephthalate unit in 100 mol% of the constituting units of the polyester is preferably 50 mol% or more, more preferably 55 mol% or more, and further preferably 60 mol% or more.

Examples of dicarboxylic acid components of the polyester in the present invention include aromatic dicarboxylic acids such as isophthalic acid, orthophthalic acid, and 2,6-naphthalenedicarboxylic acid; aliphatic dicarboxylic acids such as adipic acid, azelaic acid, sebacic acid, and decanedicarboxylic acid; and alicyclic dicarboxylic acids such as 1,4-cyclohexanedicarboxylic acid. Among them, isophthalic acid and orthophthalic acid are preferred.

When the aliphatic dicarboxylic acid (for example, adipic acid, sebacic acid, and decanedicarboxylic acid) is contained in the polyester, the content of the aliphatic dicarboxylic acid is preferably less than 3 mol% (in 100 mol% of dicarboxylic acid components).

The polyester is preferably free from trivalent or higher polycarboxylic acid (for example, trimellitic acid, pyromellitic acid, and anhydrides thereof). A heat-shrinkable polyester film produced from a polyester containing the polycarboxylic acid may not achieve required high shrinkage.

Examples of diol components of the polyester in the present invention include alicyclic diols such as neopentyl glycol and 1,4-cyclohexanedimethanol; aliphatic diols such as 1,4-butanediol, diethylene glycol, 1,3-propanediol, and hexanediol; and aromatic diols such as bisphenol A. Among them, neopentyl glycol, 1,4-cyclohexanedimethanol, 1,4-butanediol, and diethylene glycol are preferred.

Among the above constituent components of the polyester, the film of the present invention preferably contains one or more selected from the group consisting of isophthalic acid, neopentyl glycol, 1,4-cyclohexanedimethanol, butanediol, and diethylene glycol in a total amount of 1 mol% or more and 50 mol% or less. The total amount of these components of 1 mol% or less is not preferred because the heat shrinkage ratio and the heat seal strength may not fall within predetermined ranges. The total amount of these components of more than 50 mol% makes it difficult to maintain loop stiffness, which is an indicator of film stiffness, of 6 mN/25mm or more while achieving thickness reduction, which is a purpose of the present invention. The total amount of the components is more preferably 5 mol% or more and 45 mol% or less, and further preferably 10 mol% or more and 40 mol% or less. Particularly preferably, the upper limit is 30 mol% or less.

In addition to the polyester raw materials made from the above constituent components, the film of the present invention may comprise a polyester elastomer. The polyester elastomer is preferred because it enables a decrease in the reversing heat capacity difference ($\Delta$Cp) of the film, which will be described later. Examples of the polyester elastomer include a copolymer of e-caprolactone and 1,4-butanediol, and polytetramethylene-ether-glycol.

In addition to the polyester raw materials, the film may comprise a polyester raw material obtained by recycling wastes, such as PET bottles collected after use, may be preferably used from the viewpoint of environmental responsiveness of the present invention. Polyester resins obtained by recycling PET bottles are exemplified by a polyester resin obtained through physical regeneration method, in which used PET bottles collected from the market and society are subjected to sorting, crushing and washing for sufficiently removing surface stain and foreign matter, then exposed to high temperature for removing contaminants inside the resin by highly washing, and pelletized again (hereinafter the resulting polyester resin may be referred to as "mechanically recycled polyester resin" in some cases); and a polyester resin obtained through chemical regeneration method, in which a polyester resin contained in a used packaging container is decomposed to a monomer level, then contaminants are removed, and the resulting monomer is subjected to polymerization again (hereinafter the resulting polyester resin may be referred to as "chemically recycled polyester resin" in some cases).

The raw material for recycling that is applicable to the present invention is preferably obtained by recycling polyethylene terephthalate-based containers, and polyethylene terephthalate-based containers such as beverage containers for tea drinks and soft drinks are preferred. The containers may be appropriately oriented and may contain a small amount of a coloring component, though colorless containers are preferred.

The preferable raw materials recycled from the market and society, including PET bottles are polyesters produced and molded through a typical polymerization method and solid state polymerization method, preferably a polyester mainly consisting of polyethylene terephthalate, and the polyester may contain other polyester components and copolymerization components. The polyester may also contain a metal compound of antimony, germanium, or titanium as a catalyst, and a phosphorus compound as a stabilizer. Germanium has often been used as a catalyst in the production of polyester for PET bottles, and the content of germanium in a film obtained from a raw material regenerated from PET bottles becomes 1 ppm or more. However, since it is merely the catalyst content, the content is at most 100 ppm or less, and normally 50 ppm or less.

The polyester raw material for the present invention may contain additives, if needed. The additives are not particularly limited, and are exemplified by known additives such as waxes, an antioxidant, an antistatic agent, a crystal nucleating agent, a thickener, a heat stabilizer, a pigment for coloring, an anti-coloring agent, and an UV absorber.

The polyester raw material may contain a fine particle as a lubricant to improve film workability (slipperiness). The fine particle may be any fine particle irrespective of its type, inorganic or organic. Examples of the inorganic fine particle include silica, alumina, titanium dioxide, calcium carbonate, kaolin, and barium sulfate. Examples of the organic fine particle include an acrylic resin particle, a melamine resin particle, a silicone resin particle, and a crosslinked polystyrene particle. The average particle size of the fine particle is preferably within a range of approximately from 0.05 $\mu$m to 3.0 $\mu$m when measured with a coulter counter. The particle size of less than 0.05 $\mu$m may not impart a required slipperiness for handling to the film. When the particle size is more than 3.0 $\mu$m, the particles may be extensively agglomerated and coarsened, resulting in a foreign matter that significantly worsens appearance quality. The average particle size is more preferably 0.06 $\mu$m or more and 2.99 $\mu$m or less, and further preferably 0.07 $\mu$m or more and 2.98 $\mu$m or less. The amount of the fine particle added to the film is within a range of from 100 ppm to 4000 ppm.

The method for adding the fine particle to the polyester raw material is not particularly limited and may be added at any step in the production of the polyester resin. For example, the fine particle may be preferably added in the form of a slurry dispersed in ethylene glycol in the step of esterification, or in the step which comes after completion of ester exchange reaction and before the start of polycondensation reaction, and polycondensation reaction is proceeded. Alternatively, the fine particle may be added by a method in which the fine particle in the form of a slurry dispersed in ethylene glycol or water is blended with the polyester resin raw material using a kneading extruder equipped with a vent; or a method in which dried fine particle is blended with the polyester resin raw material using a kneading extruder.

2. Characteristics of the heat-shrinkable polyester film of the present invention

(1) Loop stiffness

The film of the present invention should have a loop stiffness in the width direction of the film of 6 mN/25mm or more and 200 mN/25mm or less. The loop stiffness is an indicator of film stiffness, and the film stiffness decreases with a decrease in loop stiffness. The loop stiffness of less than 6 mN/25mm undesirably causes faulty attachment of the film when heat sealed with an attachment apparatus. The loop stiffness of more than 200 mN/25mm undesirably makes it difficult for consumers to open the banding label or causes hand injury by the film. The loop stiffness is preferably 8 mN/25mm or more and 198 mN/25mm or less, and more preferably 10 mN/25mm or more and 196 mN/25mm or less.

(2) Heat shrinkage ratio

The film of the present invention should have a heat shrinkage ratio in the width direction of the film by immersion in hot water at 80°C for 10 seconds of 20% or more and 70% or less. The "width direction" denotes an orthogonal direction to the longitudinal direction (machine direction: MD) and is also referred to as the transverse direction (TD). The heat shrinkage ratio in the width direction at 80°C of less than 20% causes insufficient shrinkage of the film when shrunk onto an object, resulting in improper fitting of the film and thus worsened appearance. When the heat shrinkage ratio in the width direction at 80°C is more than 70%, the shrinkage stress upon shrinking tends to be increased, disadvantageously leading to the shrinkage stress of MPa or more. The heat shrinkage ratio in the width direction at 80°C is preferably 25% or more and 65% or less, and more preferably 30% or more and 60% or less.

(3) Heat seal strength

When one surface and the other surface of the film of the present invention is heat sealed at a temperature of 140°C at a pressure of 0.1 MPa for 1 second, the film should have a strength by shear lap peeling test of 20 N/15mm or more and 80 N/15mm or less. The heat seal strength measured by the shear lap peeling test is different from measured values by typical 90° peel test or 180° peel test. The present inventors have found that the heat seal strength measured by the shear lap peeling test is an indicator of the openability of the banding label. The heat seal strength by the shear lap peeling test of 20 N/15mm or less is not preferred because the banding label is easily opened. When the heat seal strength by the shear lap peeling test is 80 N/15mm or more, consumers undesirably find a difficulty in opening the banding label. The heat seal strength by the shear lap peeling test is preferably 25 N/15mm or more and 75 N/15mm or less, and more preferably 30 N/15mm or more and 70 N/15mm or less.

(4) Wetting tension

At least one topmost surface layer of the film of the present invention has a wetting tension of 40 mN/m or more and 55 mN/m or less. Adjusting the wetting tension of the at least one topmost surface layer to 40 mN/m easily enables the heat seal strength of 20 N/15mm or more. The wetting tension of less than 40 mN/m make it difficult to achieve the heat seal strength of 20 N/15mm. Conversely, the wetting tension of more than 55 mN/15mm may cause blocking due to adhesion between film surfaces during storage of a roll-shaped film in a warehouse. The blocking phenomenon is not preferred because the phenomenon increases breakage of the film unwound from a roll. The wetting tension is preferably 41 mN/15mm or more and 54 mN/15mm or less, and more preferably 42 mN/15mm or more and 53 mN/15mm or less.

(5) Reversing heat capacity difference ($\Delta Cp$)

The film of the present invention preferably has a reversing heat capacity difference (hereinafter, merely "$\Delta Cp$" in some cases) of 0.4 J/g·K or more and 1.4 J/g·K or less by measurement from 25°C to 140°C with a temperature-modulated differential scanning calorimeter (a temperature-modulated DSC). Hereinafter, the relationship between the $\Delta Cp$ and the heat seal strength will be described.

A higher-order structure of a polyester can be classified into two phases of a crystalline phase and an amorphous phase. In recent years, amorphous molecules have been thought to be further divided into rigid amorphous molecules and mobile amorphous molecules based on their mobility. The mobile amorphous molecules are thought to move at a glass transition temperature (Tg), and correspond to conventional amorphous molecules. The content of the mobile amorphous molecules can be quantified by determining a reversing heat capacity difference before and after the onset of glass transition from a reversible heat capacity curve measured in heat-only mode with a temperature-modulated DSC. The rigid amorphous state is assumed to lie between the mobile amorphous state and the crystalline state, and the kinetic properties of the rigid amorphous molecules are also assumed to lie between the mobile amorphous state and the crystalline state. The rigid amorphous molecules are thought to be different from the mobile amorphous molecules in that the rigid amorphous molecules do not undergo the glass transition. However, the reversing heat capacity increases slightly between a glass transition temperature and a melting point, and it is thought that the rigid amorphous molecules will change to the mobile amorphous molecules in the temperature range above a glass transition temperature. From the above, it is considered that the movement of the mobile amorphous molecules and the rigid amorphous molecules by heat sealing can develop the heat sealed surfaces to adhere to each other, resulting in the heat seal strength. In actual measurement data, the reversing heat capacity increases in many cases even at temperatures below a grass transition temperature (glass state). Although the mechanism is unknown, a change in the reversing heat capacity from room temperature to Tg is thought to be involved in the development of heat seal strength.

The present inventors considered the reversing heat capacity difference that increased from room temperature to the heat sealing temperature as the sum of changes in mobile amorphous molecules and the rigid amorphous molecules, and studied the relationship between the reversing heat capacity difference and the heat seal strength. As a result, the present inventors have found that the desired heat seal strength and heat resistance property can be achieved by controlling the amount of change of each of the mobile amorphous molecules and the rigid amorphous molecules to a predetermined range.

The $\Delta Cp$ of 0.4 J/g·K or more can readily achieve the heat seal strength of 20 N/15mm or more. Although the $\Delta Cp$ of more than 1.4 J/g·K can increase the heat seal strength, the film may not have required strength. The $\Delta Cp$ is more preferably 0.45 J/g·K or more and 1.35 J/g·K or less, and further preferably 0.5 J/g·K or more and 1.3 J/g·K or less. The film forming methods and conditions that allows the $\Delta Cp$ to be set within a desired range will be described later.

(6) Thickness

The film of the present invention has a thickness of preferably 20 μm or more and 50 μm or less. Adjusting the film thickness to 20 μm or more preferably enables the loop stiffness of 6 mN/25mm or more. The film thickness of more than 50 μm undesirably leads to the loop stiffness of more than 200 mN/25mm, and makes it difficult to demonstrate environmental responsiveness (resource saving through film thickness reduction), which is a purpose of the invention. The thickness is more preferably 22 μm or more and 48 μm or less, and further preferably 24 μm or more and 46 μm or less.

(7) Heat shrinkage ratio in longitudinal direction

The film of the present invention has a heat shrinkage ratio in the longitudinal direction (machine direction, or simply MD) of the film by immersion in hot water at 80°C for 10 seconds of preferably -5% or more and 8% or less. The heat shrinkage ratio in the longitudinal direction at 80°C of less than -5% may undesirably cause significant elongation of the film upon shrinking onto an object, resulting in wrinkles and thus worsened appearance of the shrunk film. The heat shrinkage ratio in the longitudinal direction at 80°C of more than 8% may undesirably cause distortion and sink marks of after shrinking. The heat shrinkage ratio in the longitudinal direction at 80°C is preferably -4% or more and 7% or less, and more preferably -3% or more and 6% or less.

(8) Glass transition temperature (Tg)

The film of the present invention preferably has a Tg of 50°C or higher and 100°C or lower. The Tg of lower than 50°C may undesirably cause blocking of the films during storage in a roll form. When the Tg is higher than 100°C, the heat seal strength may not reach 20 N/15mm while achieving the ΔCp of 0.4 J/g·K or more. As described above, the ΔCp is assumed to be closely related to the heat seal strength in the present invention, and the ΔCp is thought to be closely related to Tg. Even if the sealing bar is at a set temperature, the temperature applied to the film may be lower than the set temperature in high-speed heat sealing (for example, 1 second) with an actual attachment apparatus. Accordingly, in the case of a film having a Tg of higher than 100°C, heat sealing at low temperature and high speed (for example, heat sealing at 140°C for 1 second) cannot induce transition from glassy state for the film, and the ΔCp of 0.4 J/g·K or more may not be achieved. Tg is more preferably 55°C or higher and 95°C or lower, and further preferably 60°C or higher and 90°C or lower.

(9) Intrinsic viscosity (IV)

The film of the present invention has an intrinsic viscosity represented by IV of preferably 0.6 dL/g or more and 1.2 dL/g or less. The IV of less than 0.6 dL/g may not achieve minimum required mechanical strength for the film, and breakage may occur during film formation. The IV of more than 1.2 dL/g may cause an increase in pressure during melting of raw materials in an extruder, leading to undesired filter deformation. The IV is preferably 0.65 dL/g or more and 1.15 dL/g or less, and more preferably 0.7 dL/g or more and 1.1 dL/g or less.

(10) Maximum heat shrinkage stress in width direction

The film of the present invention preferably has a maximum heat shrinkage stress when shrunk in the width direction in hot air of 90°C for 30 seconds of 3 MPa or more and 22 MPa or less. The maximum heat shrinkage stress in the width direction at 90°C of more than 22 MPa may undesirably cause peeling of the sealed portion of the banding label during heat shrinkage, even if the above heat seal strength of 20 N/15mm or more is achieved. The maximum heat shrinkage stress in the width direction of less than 3 MPa may undesirably cause slipping of an object from the shrunk film. The maximum heat shrinkage stress in the width direction is more preferably 4 MPa or more and 21 MPa or less, and further preferably 5 MPa or more and 20 MPa or less.

(11) Heat seal initiation temperature

The film of the present invention has a heat seal initiation temperature of preferably 100°C or higher and 150°C or lower when one surface and the other surface of the film are heat sealed. The heat seal initiation temperature is the temperature at which the strength measured by shear lap peeling test first reaches 2 N/15mm or more under heat sealing conditions of a pressure of 0.1 MPa, a sealing time of 1 second, and heat seal temperatures changed from 90°C to 160°C at an interval of 5°C. The heat seal initiation temperature of higher than 150°C reflects the lack of low-temperature sealability, and is disadvantageous for the high-speed attachment by an automated machine (low yield of banding label). Although the heat seal initiation temperature of lower than 100°C can increase the low-temperature sealability, blocking between films may be disadvantageously caused during storage of the film in a roll. The heat seal initiation temperature is more preferably 105°C or higher and 145°C or lower, and further preferably 110°C or higher and 140°C or lower.

(12) Percentage of oxygen atom present on film surface

At least one topmost surface layer of the film of the present invention preferably has the percentage of oxygen atom present on film surface of 27% or more and 31% or less when the percentage of oxygen atom is determined from a peak of an oxygen atom and a peak of a carbon atom in the spectrum by Electron Spectroscopy for Chemical Analysis (ESCA). The detailed measurement method of the percentage of oxygen atom present on film surface will be described later. The percentage of oxygen atom present on film surface of 27% or more may readily achieve the wetting tension of 40 mN/m, and thus the heat seal strength of 20 N/15mm or more may also be easily achieved. Although higher a percentage of oxygen atom present on film surface is preferred to increase the wetting tension and the heat seal strength, blocking may be undesirably caused during storage in a roll form.

When the percentage of oxygen atom present on film surface is high, it is considered that a large number of functional groups, such as carboxy groups or hydroxy groups, are present on the film surface. Since these functional groups are polarized (for example, an oxygen atom has a charge "δ+", and a hydrogen atom has a charge "δ-"), it is thought that the electrical attraction between film surfaces increases as the film surfaces come closer with each other, resulting in increased heat seal strength. Since these functional groups protrude sterically from the film surface, it is thought that the functional groups can also have a function like wedges. Accordingly, the heat seal strength can be increased by electrical and physical interaction of functional groups having an oxygen atom. The percentage of oxygen atom present on film surface is more preferably 27.5% or more and 30.5% or less, and further preferably 28% or more and 30% or less.

(13) Haze

The film of the present invention has a haze of preferably 2% or more and 20% or less. The haze of more than 20% may cause degraded transparency, and an object (contents) may not be undesirably seen. The film has a haze of more preferably 19% or less, and further preferably 18% or less. Although a smaller haze is preferred, the lower limit of the haze is approximately 2%. This is because addition of a predetermined amount of lubricant is required to impart slipperiness required for practical use to the film.

3. Method for producing heat-shrinkable polyester film according to the present invention

The film of the present invention can be produced by melt extruding the polyester raw material from an extruder and then stretching the resulting unstretched film by the following method and conditions. The polyester can be obtained by polycondensation of preferred dicarboxylic acid components and diol components described above by a known method. Typically, two or more of tip-shaped polyesters are mixed and used as raw materials of the film. Hereinafter, detailed description of each step will be given.

3.1. Melt extrusion

Prior to the melt extrusion of the raw material resin, the polyester raw materials are preferably dried with a drier such as a hopper dryer or a paddle dryer, or a vacuum dryer. The polyester raw materials dried in such a manner are then melted at a temperature in the range of from 200°C to 330°C with an extruder, and extruded into a film shape. The molten resin may be extruded by any existing method, such as a T-die method or a tubular method.

The unstretched film can be obtained by rapidly cooling a sheet-shaped molten rein after extrusion. As a method for rapidly cooling the molten resin, the method in which the molten resin is discharged from a nozzle to be cast onto a rotating drum for rapid cooling can be preferably employed, and a substantially unoriented resin seat can be preferably obtained.

The obtained unstretched film is then stretched in the longitudinal direction and/or width direction according to the method detailed below, and the film of the present invention will be obtained. Although the unstretched film may be uniaxially stretched in either the longitudinal or transverse direction, or may be biaxially stretched in both the longitudinal and transverse directions, biaxial stretching is preferably employed to achieve productivity, which is a purpose of the present invention. In the case of biaxial stretching, the stretching may be either of the sequential biaxial stretching, in which stretching in either of the longitudinal or the transverse direction is followed by stretching in the other direction, or the simultaneous biaxial stretching, in which stretching is simultaneously conducted in both the longitudinal and transverse directions. Hereinafter, the method and conditions for longitudinal-transverse sequential biaxial stretching, in which stretching in the longitudinal direction is followed by stretching in the transverse direction, will be described.

## 3.2. Longitudinal stretching

Preferably, in the production of the film of the present invention, the substantially unoriented film is introduced into a lengthwise stretching machine provided with a plurality of continuously arranged rolls, then heated with a preheating roll, and longitudinally stretched at stretching ratio of 1.0 time or more and 4.5 times or less. The stretching ratio in the longitudinal direction of 1.0 time means that the film is not substantially stretched in the longitudinal direction. The film is preferably preheated until the film temperature reaches a temperature in the range of from 60°C to 110°C on a preheating roll. The film temperature of lower than 60°C makes it undesirably difficult for the film to be stretched in the longitudinal direction (due to increased film breakage). When the film temperature is higher than 110°C, the film may easily stick to a roll, and wrapping of the film onto a roll may significantly reduce the productivity.

Once the film temperature reaches within the above range, the film is longitudinally stretched using speed difference between rolls. In the longitudinal stretching, increasing in the distance between rolls used for longitudinal stretching can increase the stretching ratio in the longitudinal direction while maintaining the ∆Cp of the film low. This is because the stretching speed in the longitudinal direction decreases with an increase in the distance between rolls, resulting in suppression of crystallization and rigid amorphous formation. However, the increase in the distance between rolls may cause a drawback of decreased productivity because neck-in (Poisson's ratio) in the direction orthogonal to the stretching direction (width direction in the present invention) increases with the increase in the distance. If a film width after a longitudinal stretching is reduced, the inlet width of a subsequent transverse stretching in a tenter will also be reduced, resulting in correspondingly reducing an outlet width in a tenter. The distance between rolls is preferably 80 mm or more and 500 mm or less, and more preferably 90 mm or more and 490 mm or less. If a stretching ratio in the transverse direction is increased to cover the decrease in the productivity, the ∆Cp may easily fall below 0.4 J/g·K. Thus, in the present invention, the longitudinal stretching is preferably conducted in multiple stages to achieve the ∆Cp of 0.4 J/g·K or more even in the case of the longitudinal stretching at a higher stretching ratio, as well as improved productivity. Specifically, the preferred embodiment of rolls arrangement for longitudinal stretching (stretching stage) includes three groups (two-stage stretching) of low-speed group, mid-speed group, and high-speed group; four groups (three-stage stretching) of low-speed group, slightly-low-speed group, slightly-high-speed group, and high-speed group, which are increased from the usual two groups (single-stage stretching) of low-speed group and high-speed group. Although increasing the number of stretching stages is preferable since this effect becomes significant, it requires huge equipment. The number of stretching stages is preferably one to three.

In the longitudinal stretching, the stretching ratio in each stage is preferably 1.0 time or more and 3.2 times or less, and more preferably 1.1 times or more and 3.1 times or less.

## 3.3. Intermediate heat treatment after longitudinal stretching

After the longitudinal stretching, the film is preferably subjected to intermediate heat treatment to reduce the heat shrinkage ratio in the longitudinal direction. The temperature at intermediate heat treatment is preferably 100°C or higher and 160°C or higher, more preferably 105°C or higher and 155°C or lower, and further preferably 110°C or higher and 150°C or lower. The shrinkage in the longitudinal direction of the film due to the longitudinal stretching can be further reduced by relaxing the film in the longitudinal direction (relaxation in the longitudinal direction) during intermediate heat treatment. In addition, the relaxation in the longitudinal direction can also prevent bowing phenomenon (distortion), which occurs during processing in a tenter. The relaxing rate in the longitudinal direction is preferably 0% or more and 60% or less, though relaxing is not conducted at the relaxing rate of 0%. The upper limit of the relaxing rate in the longitudinal direction is determined depending on the raw materials used and the conditions for longitudinal stretching, and relaxation cannot be conducted beyond the upper limit. The film can be relaxed in the longitudinal direction by heating the longitudinally stretched film at a temperature in the range of 65°C to 100°C and adjusting the speed difference between rolls. The film may be heated by any method using a roll, near infrared rays, far infrared rays, and hot-air heater. The relaxing in the longitudinal direction is not necessarily conducted immediately after the longitudinal stretching but can be conducted at any timing, for example, by reducing the distance between clips arranged in the longitudinal direction during transverse stretching (including a preheating zone) or the final heat treatment (in this case, bowing phenomenon can be prevented since both edges in the film width direction can be relaxed in the longitudinal direction).

After the relaxation in the longitudinal direction (or after longitudinal stretching in the absence of relaxation), the film is preferably cooled, using a cooling roll set at a surface temperature in the range of 20°C to 40°C.

## 3.2. Transverse stretching

The film after longitudinal (longitudinal) stretching is continuously introduced into a tenter to be preheated and subsequently stretched in the transverse direction. The temperature of the preheating zone is preferably 80°C or higher and 150°C or lower. The preheating temperature of lower than 80°C may facilitate oriented crystallization during transverse stretching, disadvantageously causing the $\Delta$Cp of less than 0.4 J/g·K and the film breakage. On the other hand, the preheating temperature of higher than 150°C may increase thickness nonuniformity in the width direction, disadvantageously worsening the roll quality of the wound film.

The residence time of the film in the preheating zone is preferably 2 seconds or longer and 10 seconds or shorter. The residence time of shorter than 2 seconds makes it difficult for the film to reach a temperature required for stretching in the width direction, which may cause the same concern as the case of preheating at temperature of lower than 80°C. Although the residence time of longer than 10 seconds may not affect the transverse stretching, the residence time may undesirably require an increase in the scale of production facilities.

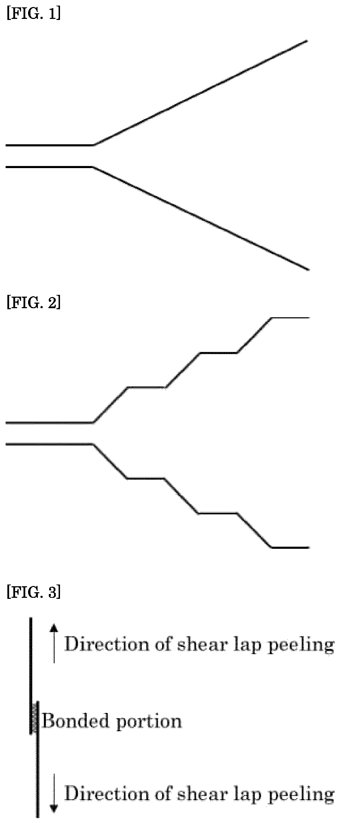

After the preheating zone, the film is continuously transversely stretched in a transverse stretching zone, in which the distance between clips in the width direction of the tenter is increased. The present inventors have found that similarly to the longitudinal stretching, increasing the number of stretching stages in the transverse stretching can suppress the increase in the $\Delta$Cp even as the stretching ratio increases, thereby ensuring the required heat sealability. Specifically, to achieve both the productivity and a predetermined $\Delta$Cp, multi-stage stretching (for example, three-stage stretching as shown in FIG. 2), in which clips are arranged so as to have non-stretching area (the area in which the clips are arranged parallel to the direction of travel), is preferred to the conventional uniaxial stretching (FIG. 1), in which clips are linearly arranged from the starting point to the end point of the transverse stretching. This is because the molecular chains elongated by stretching are thermally relaxed under strain in the non-stretching area. For example, FIG. 8 in Not-Patent Document 1 shows the X-ray diffraction images of polyethylene terephthalate at a stretching ratio from 2.0 (a and b) to 4.0 (i and j) that are immediately after the stretching (upper column) and approximately 0.2 seconds after the stretching (bottom column). The structural change with the passage of time after the end of stretching can be read. When the stretching ratio is 4.0, crystallization occurs approximately 0.2 seconds after the completion of the stretching (j), whereas no structural change occurs and PET keeps amorphous (b and d) when the stretching ratio is approximately 2.2. Further, FIG. 2 shows X-ray diffraction images immediately after the stretching (upper column) and the X-ray diffraction images approximately 0.2 seconds after the stretching (bottom column) under changes in stretching temperatures of from 85°C to 130°C. It can be read from (p) that the film does not become crystalline even after a long time has elapsed after the end of stretching in the case of stretching at 130°C. According to the Not-Patent Document 1, the oriented crystallization did not occur even after stretching (i and j in FIG. 8 and p in FIG. 2) because the relaxation rate of molecules due to heat is faster than the orientation rate of molecules due to stretching. In the present invention, (amorphous) polyester, which is less crystalline than polyethylene terephthalate, is used as a raw material. Thus, the stretching ratio required to cause oriented crystallization is larger than that of polyethylene terephthalate. Further, it is assumed that the oriented molecules of the polyester after stretching may be in a state of thermally relaxed easily. Conventionally, the oriented molecular chains could have been relaxed by reducing the distance between clips in the tenter width direction (relaxation in the width direction). However, the reduction of distance between clips decreased a film width at a tenter outlet, resulting in a loss of productivity. The present inventors have studied the method which allows the film to have required $\Delta$Cp while the productivity is being kept or improved. The present inventors have found that the oriented molecular chains can be thermally relaxed efficiently and the $\Delta$Cp can be reduced by using the amorphous polyester as a raw material and providing the non-stretching area in the transverse stretching zone (i.e., multi-stage stretching) as described above. Based on the technical idea, it is considered that a higher number of the stretching stage is preferred to achieve the $\Delta$Cp within a predetermined range and improve productivity, but the increase in the reaction stage may cause and increase in tenter length. The number of stretching stage in the transverse direction is preferably two or more and four or less.

In transverse stretching, the stretching ratio is preferably 1.1 times or more and 3 times or less for each stretching stage. The final stretching ratio, which is a product of the stretching ratios of all the stretching stages, is preferably 3.5 times or more and 6 times or less.

The stretching temperature in the transverse direction is preferably 80°C or higher and 150°C for any stretching stage. The passing time of the film per stage in the transverse stretching is preferably 1 second or longer and 10 seconds or shorter. The passing time depends on stretching ratio and line speed, and may be appropriately changed.

3.3. Heat treatment

After transverse stretching conducted as described above, the film grasped by clips at both edges in the width direction can be heat treated in a tenter, if needed. The heat treatment means a heat treatment conducted at a temperature of 80°C or higher and 120°C or lower for 1 second or longer and 9 seconds or shorter. The heat treatment is preferred because it enables improvement of dimensional stability even after the passage of time due to storage. When the heat treatment temperature is lower than 80°C, the effect of the heat treatment may not be sufficiently achieved. The heat treatment temperature of higher than 120°C may cause a fall of the heat shrinkage ratio in the width direction below 20%, which is the lower limit of the heat shrinkage ratio.

Longer time of heat treatment is preferred to achieve the effect, but too long heat treatment time requires a huge equipment, hence the heat treatment time is preferably controlled to 1 second or longer and 9 seconds or shorter, and more preferably 5 seconds or longer and 8 seconds or shorter.

In the heat treatment step, the film can be relaxed in the width direction by reducing the distance between the clips that grasp a film in a tenter. However, the relaxing rate is preferably 0% or more and 10% or less to avoid a decrease in productivity.

## 3.4. Surface treatment

At least one topmost surface layer of the film is subjected to surface treatment to increase heat seal strength. Examples of the surface treatment include corona treatment, plasma treatment, flame treatment, sandblast treatment, and coating. Among them, corona treatment, plasma treatment, and coating are preferred. The corona treatment and the plasma treatment allow the wetting tension to be readily adjusted to 40 mN/m or more. The degrees of corona treatment and plasma treatment (wetting tension) varies depending on the distance between the electrode and the film, discharge voltage, and film processing speed (line speed), and is determined by combinations thereof.

The film surface may be coated with, for example, a resin having heat sealability to improve low-temperature heat sealability. A resin having heat sealability may be exemplified by the polyester resin described in "1. Polyester raw materials for heat-shrinkable polyester film". A solution obtained by dissolving one or two or more of the resins in a solvent may be applied to the film surface. Among the constituent components of the polyester as described above, isophthalic acid, neopentyl glycol, and 1,4-cyclohexanedimethanol are preferred. Also, sebacic acid and 1,3-propanediol are preferred in the case of coating in addition to them. At least one selected from them are preferably contained in the coating solution in an amount of 40 mol% or more and 100 mol% or less. When the total amount of the components is 40 mol% or less, the components may not be easily dissolved into a solvent in the preparation of a coating solution. The coating liquid can be applied to the film surface at any timing during the film forming process. After completion of the above steps, the resulting film can be wound on a core, such as paper core, to form a film roll.

## 4. Annular label

The annular label of the present invention comprises the heat-shrinkable polyester film of the present invention at least in part, a bonded portion adhering the heat-shrinkable polyester film to itself, or the heat-shrinkable polyester film to another film, and a strength of the bonded portion by shear lap peeling test is 20 N/15mm or more and 80 N/15mm or less. The length (circumferential length) and the number of the bonded portion of the annular label of the present invention can be appropriately determined. The annular label is preferably the above described banding label.

As another film for forming the annular label of the present invention, a conventionally known film can be used at any length regardless of the characteristics described in "2. Characteristics of the heat-shrinkable polyester film of the present invention". The film may be formed from any raw material, for example, polyester-based, polyolefin-based, or polyamide-based raw material.

The annular label of the present invention can be formed by a bonding method of, for example, heat sealing, ultrasonic sealing, and center sealing using a solvent, and a method using hot (hot melt) or cold glue. Among them, heat sealing and ultrasonic sealing are preferred, and heat sealing is more preferred. The heat seal strength varies depending on the temperatures and pressures of a heat sealing bar (the surface of the sealing bar that contacts with the film) and sealing time, and is determined by combinations thereof. Even if the heat seal temperature is increased, shortening of the sealing time lowers actual temperature applied to the film. For example, the heat seal temperature is preferably 100°C or higher and 180°C or lower, more preferably 110°C or higher and 170°C or lower, and further preferably 120°C or higher and 160°C or lower. The heat seal temperature of lower than 100°C may lead to the heat seal strength lower than 20 N/15mm. The heat seal temperature of higher than 180°C preferably enables improved heat seal strength, but the heat seal temperature may facilitate heat shrinkage and thus changes in label dimensions of the heat sealed portion, resulting in worsened appearance. The heat sealing pressure is preferably 0.05 MPa or more and 0.6 MPa or less, more preferably 0.1 MPa or more and 0.55 MPa or less, and further preferably 0.15 MPa or more and 0.5 MPa or less. When the heat sealing pressure is less than 0.05 MPa, a sealing bar cannot heat the film sufficiently, and the heat seal strength may be decreased to lower than 20 N/15mm. The heat sealing pressure of more than 0.05 MPa may not significantly change the heat seal strength as far as the present inventors have studied, and the heat sealing pressure of more than 0.6 MPa may cause film breakage.

The sealing time is preferably 0.1 seconds or longer and 3 seconds or shorter, more preferably 0.2 seconds or longer and 2.9 seconds or shorter, and further preferably 0.3 seconds or longer and 2.8 seconds or shorter. The sealing time of less than 0.1 seconds may easily lower the heat seal strength to less than 20 N/15mm. The sealing time of more than 3 seconds is preferred in that the heat seal strength can be improved, but cannot improve productivity which is a purpose of the present invention.

5. Packaged product

A packaged product according to the present invention comprises the annular label of the present invention. Specifically, the annular label of the present invention is used to cover a packaging object at least in part, and then the annular label comprising the heat-shrinkable polyester film of the present invention is heat shrunk onto it. A part of the heat-shrinkable polyester film forming the annular label of the present invention may be heat shrunk.

A packaging object is not particularly limited, and is exemplified by a plastic container having a square or a round shape, or a PET bottle.

EXAMPLES

Hereinafter, the present invention will be specifically described with Examples and Comparative Examples. The scope of the present invention is not limited to Examples, and can be carried out with modification within a range conforming to the gist of the present invention. The following characteristics of polyester films shown in Table 2 were evaluated.

[Thickness]

The thickness of the film was measured with a dial gauge in accordance with the method A described in JIS K 7130:1999.

[Tg (glass transition point)]

The sample film was weighed out at $5.0 \pm 0.2$ mg in a T-zero or an aluminum pan (flat dish shape). Subsequently, the sample film was measured with a temperature-modulated differential scanning calorimeter (DSC, model: DSC250, manufactured by TA Instruments), at an average temperature raising speed of 2°C/min and a modulation period of 40 seconds by MDSC (registered trademark) heat-only mode to obtain a reversing heat flow. Upon enclosing the sample film in the pan, a circular-shaped sample film (diameter: 4.5 mm) was prepared by punching stacked films so that the circular-shaped sample film would have high adhesion to the bottom surface of the pan. When the sample film had "high adhesion to the bottom surface of the pan", the sample could be placed in the pan without bending, and the sample film in the pan could be held down and closed with a lid without making space between the films. The film before punching might be wrinkled, but the wrinkles were preferably smoothed out for punching. The shape and the size of the punched sample was not limited to the above as long as the sample film could fit the bottom surface of the pan without bending.

In the resulting reversing heat flow, Tg was measured from a signal emerged with stepwise changes from a baseline. Specifically, a baseline on the lower temperature side than Tg and a baseline on the higher temperature side than Tg were extended. The intersections of each extended baselines and a tangent line at an inflection point (Tg) were found. The value of the abscissa at these intersections were read. The average of the values from both of the lower temperature side and the higher temperature side was determined as Tg.

[Intrinsic viscosity IV (film, polyester raw material)]

The film or the polyester raw material (resin) was dissolved in a 6/4 (weight ratio) mixed solvent of phenol/1,1,2,2-tetrachloroethane, and the intrinsic viscosity was measured at 30°C.

[Wetting tension]

The film was subjected to aging at 23°C at 50% relative humidity for 24 hours in accordance with the method described in JIS K 6768: 1999, and the wetting tension of the film surface was measured.

[Percentage of oxygen atom present on film surface]

The film surface was measured with an X-ray photoelectron spectrometer (ESCA spectrometer, model: K-Alpha, manufactured by Thermo Fisher Scientific K.K.).

Excited X-ray: monochromatic AlK$\alpha$-ray
X-Ray output: 12 kV, 6 mA
Photoelectron escape angle: 90°
Spot size: 400 $\mu$mΦ

Pass energy: 50 eV (narrow scan), 200 eV (entire element scan)
Step: 0.1 eV (narrow scan), 1 eV (entire element scan)

From the spectral data of narrow scans for C, N, O, and Si, the peak intensity of oxygen atoms between 530 eV and 540 eV was divided by the peak intensity of carbon atoms between 280 eV and 290 eV, and the resulting peak intensity ratio was determined as the percentage of oxygen atoms present on film surface. The measurement was repeated four times, and the average of the peak intensity ratios was determined.

[Loop stiffness]

Laminated films produced in Examples and Comparative Examples were cut into strip-shaped films each having a width of 25.4 mm and a length of 110 mm to prepare samples for loop stiffness measurement. The strip-shaped film was prepared so that the longitudinal direction of the strip-shaped film would correspond to the direction of measurement. The strip-shaped film was set to a loop stiffness tester (manufactured by Toyo Seiki Seisaku-sho, Ltd.), and the repulsive force was measured at a measurement frequency of 50 Hz. The measured value of repulsive force (mN) was determined as a loop stiffness.

[Heat shrinkage ratio (hot-water heat shrinkage ratio)]

The film was cut into a square test piece with dimensions of 10 cm × 10 cm. The test piece was immersed in hot water at 80°C ± 0.5°C for 10 seconds under no-load condition to be heat shrunk, then immersed in water at 25°C±0.5°C for 10 seconds, and the test piece was recovered from the water to measure the film dimensions in both longitudinal and transverse directions. The heat shrinkage ratio was determined according to the following Equation (1), and the direction having a greater heat shrinkage ratio was determined as the main shrinkage direction (width direction).

heat shrinkage ratio (%) = {(length before shrinkage - length after shrinkage)/ length before shrinkage} × 100      Equation (1):

[Heat seal strength]

The heat seal strength was measured in accordance with JIS Z 1707. The following is a brief description of specific procedures. The topmost surface layer and the other topmost surface layer of the film sample were heat sealed with a heat sealer. The heat sealing was conducted under conditions of an upper sealing bar temperature of 140°C, a lower sealing bar temperature of 30°C, a pressure of 0.2 MPa, and a sealing time of 2 seconds. From the heat sealed film, 10 samples each having a sealing width of 15 mm were cut out. The peel strength was measured with a tension testing machine (model: AUTOGRAPH AG-Xplus, manufactured by SHIMADZU CORPORATION) at a tensile rate of 200 mm/min. The measurement was conducted so that the peeling direction would correspond to the shear lap peeling direction as shown in FIG. 3. The heat seal strength was obtained from the average of 10 tests, and was expressed as the strength per 15mm (N/15mm).

[Heat seal initiation temperature]

The heat seal initiation temperature was evaluated in accordance with JIS Z 1707. The following is a brief description of the specific measurement steps. The topmost surface layer and the other topmost surface layer of the film sample were sealed with a heat sealer. The heat sealing was conducted under conditions of a lower sealing bar temperature of 30°C, a pressure of 0.2 MPa, a sealing time of 2 seconds, and an upper sealing bar temperature changed from 90°C to 160°C at an interval of 5°C, and sealed samples were prepared for each temperature. From the sample, 10 sample pieces with a sealing width of 15 mm were cut out for each upper sealing bar temperature. The peel strength was measured with a tension testing machine (model: AUTOGRAPH AG-Xplus, manufactured by SHIMADZU CORPORATION) at a tensile rate of 200 mm/min. The measurement was conducted so that the peeling direction would correspond to the shear lap peeling direction as shown in FIG. 3. The heat seal strength was obtained from the average of 10 tests, and was expressed as the strength per 15mm (N/15mm). The heat seal initiation temperature was determined as the temperature at which the heat seal strength first reached 2 N/15mm or more.

[Maximum heat shrinkage stress]

A sample having a length along the main shrinkage direction (width direction) of 200 mm and a width (longitudinal direction) of 20 mm was cut out from the polyester film. The measurement was conducted with an elongation measuring machine equipped with a heating furnace (TENSILON, registered trademark of ORIENTEC Co., LTD.). The heating furnace was heated to 90°C in advance, and a difference between chucks was set to 100 mm. In order to set the sample, the air blowing in the heating furnace was stopped, followed by opening the heating furnace, and the sample was set to chucks. Immediately after the sample setting, the door of the heating furnace was closed, and the air blowing was restarted. Then, the heat shrinkage stress in the width direction was measured by shrinking the sample in a hot air at 90°C for 30 seconds, and the maximum measured value was determined as the maximum heat shrinkage stress (MPa).

[Reversing heat capacity difference]

The sample film was weighed out at $5.0 \pm 0.2$ mg in a T-zero or an aluminum pan (flat dish shape). Subsequently, the sample film was measured with a temperature-modulated differential scanning calorimeter (DSC, model: DSC250, manufactured by TA Instruments), at an average temperature raising speed of 2°C/min and a modulation period of 40 seconds by MDSC (registered trademark) heat-only mode to obtain a reversing heat flow. Upon enclosing the sample film in the pan, a circular-shaped sample film (diameter: 4.5 mm) was prepared by punching stacked films so that the circular-shaped sample film would have high adhesion to the bottom surface of the pan. When the sample film had "high adhesion to the bottom surface of the pan", the sample could be placed in the pan without bending, and the sample film in the pan could be held down and closed with a lid without making space between the films. The film before punching might be wrinkled, but the wrinkles were preferably smoothed out for punching. The shape and the size of the punched sample was not limited to the above as long as the sample film could fit the bottom surface of the pan without bending.

The reversing heat capacity difference between temperatures of from 30°C to 140°C was calculated from the resulting reversing heat flow according to Equation 2, with a bundled analysis software (name: Trios, manufactured by TA Instruments).

$$\text{Equation 2: reversing heat capacity difference } \Delta Cp = Cp1 - Cp2$$

Cp1: Heat capacity at 140°C
Cp2: Heat capacity at 30°C

[Haze]

The haze was measured with a haze meter (model: 500A, manufactured by NIPPON DENSHOKU INDUSTRIES CO., LTD.) in accordance with JIS K7136. The measurement was repeated twice, and the average of the measured values was determined as the haze of the film.

[Blocking resistance]

The blocking value was measured in accordance with ASTM D1893:67. Two sample films with dimensions of 150 mm along the longitudinal direction and 200 mm along the width direction were cut out, and one side of the sample film was stacked to the other side of the other sample film so that different surfaces would face with each other. Then, the stacked sample films were sandwiched by smooth glass plates (250 mm square), followed by placing 20 kg ($5 \times 4$ kg) weights on it, and the film samples in this state was placed and left in a hot air oven set at $60°C \pm 2°C$ for 24 hours. After that, the stacked sample films were recovered and subjected to seasoning in an environment at 23°C at a humidity of 65% for 1 hour. The stacked sample films after seasoning were peeled by approximately 3 cm from the edge, then the stacked sample films were set to an upper chuck of AUTOGRAPH (model: AG-Xplus, manufactured by Shimadzu Corporation), and a bar (diameter: 6 mm) was set to a bottom chuck. Then the strength when the bar peeled the blocked portion at a rate of 100 m/min was measured. The bar was set to be horizontal to the peeling surface, and the measurement was conducted along the longitudinal direction of the film (direction in which the chucks move), and the average of two tests were determined as the blocking value (unit: mN/200mm). The obtained blocking values were evaluated in accordance with the following criteria. The films samples that separated before testing were evaluated as "Good", and the film samples that did not separate by hand during setting to chucks were evaluated as "Bad".

Good: Blocking value of 0 mN/200mm or more and less than 1000 mN/200mm.
Bad: Blocking value of 1000 mN/200mm or more.

[Attachment]

A sample film having dimensions of 90 mm along the longitudinal direction and 250 mm along the width direction was cut out from the film, then placed on a plastic noodle container (long side: 220 mm, short side: 150 mm, height: 50 mm) available at a convenience store, and placed on a conveyor belt set at 20 cm/sec to evaluate misalignment of the film position. Upon placing on a conveyor belt, the film was placed on the container so that the longitudinal direction of the film would correspond to the short side of the container, and the film edge position was marked on the container to record an initial position. After conveying on a conveyor belt, a travel distance of the film from the initial position was measured, and the distance was evaluated in accordance with the following criteria.

Good: Travel distance of 1 cm or less.
Bad: Travel distance of more than 1 cm.

[Shrinkage finishing property]

A sample film was cut out so that the width of the banding label, which was in the longitudinal direction of the film, would become 90 mm relative to a plastic noodle container (long side: 220 mm, short side: 150 mm, height: 50 mm) available at a convenience store. One of two sample films prepared in the above described manner was placed on the container while the other was placed under the container, then the films were heat sealed at 140°C at their edges (two bonded portions), forming an annular shaped film covering the container by heat sealing for fastening. The films were placed so that the film shrinkage direction (width direction) would correspond to the circumferential direction of the annular film, the annular film would fasten the container by the long sides, and the middle point in the width direction of the annular film would correspond to the middle point of the long side. The annular film was set to have a degree of sagging of 25% to the container. A packaged product including the noodle container and the annular label was heat shrunk in a hot-air type shrink machine (model: TORNADO 2500, manufactured by Nippon Technology Solution Co., Ltd.) with hot air set at 110°C. Then, the shrinkage finishing property was evaluated. The shrinkage finishing property was evaluated based on the following two points: adhesion to a container and tearing of a heat sealed portion.

(Adhesion to container)

The adhesion to a container was evaluated based on the slipping of a container from an annular label when a packaged product fastened with the annular label by shrinkage was lifted. The evaluation was conducted in accordance with the following criteria.

Good: The container was held by the annular label without being slipped off.
Bad: The container was slipped off from the annular label.

(Peeling of heat sealed portion)

The peeling of heat sealed portion was observed at two points after shrinkage finishing, and the degree of peeling was evaluated in accordance with the following criteria.

Good: Peeling was not observed.
Bad: Partial peeling or whole peeling of at least one heat sealed portion was observed.

<Synthesis of polyester raw materials>

[Synthesis of polyester raw material A]

Into a polymerization apparatus equipped with a stirrer, a distillation column, and a pressure adjuster, terephthalic acid and glycols (ethylene glycol, neopentyl glycol and diethylene glycol) were charged in a specific ratio (G/T: glycols/terephthalic acid in molar ratio), and esterification reaction was conducted at a reaction temperature of 240°C and a reaction pressure of 0.35 MPa while the water generated in the esterification reaction was sequentially removed.

Subsequently, predetermined amounts of an ethylene glycol solution obtained by dissolving an aluminum compound (basic aluminum acetate) and an ethylene glycol solution obtained by dissolving a phosphorus compound (Irganox1222) was added, then the temperature of the system was raised to 280°C over 1 hour while the pressure of the system was gradually decreased to 0.15 kPa, and the polycondensation reaction was conducted while the condition of the system was maintained and glycol generated in the polycondensation reaction was sequentially removed. When the stirring torque reached a predetermined magnitude, the reaction vessel was purged with nitrogen gas to return the pressure to atmospheric pressure, then resulting polyester resin was removed from the polymerization apparatus to be solidified by cooling with water, and the polyester resin was cut with a strand cutter into pellets to produce the polyester raw material A. The composition of monomer components of the resulting polyester raw material A is shown in Table 1. In Table 1, the content of each monomer in 100 mol% of the total acid components is disclosed in "acid components" column, and the content of each monomer in 100 mol% of the total polyol components is disclosed in "polyol components" column. In Table 1, TPA represents terephthalic acid, IPA represents isophthalic acid, EG represents ethylene glycol, BD represents butanediol, NPG represents neopentyl glycol, CHDM represents cyclohexanedimethanol, DEG represents diethylene glycol, and SA represents sebacic acid.

[Synthesis of polyester raw materials B to E]

Polyester raw materials B to E, each of which had a different monomer component as shown in Table 1, were produced in the same manner as the polyester raw material A. In the production of the polyester raw material D, $SiO_2$ (grade: SYLYSIA 266, average particle size: 1.5 $\mu$m, manufactured by FUJI SILYSIA CHEMICAL LTD.) as a lubricant was added to a polyester at a rate of 7,000 ppm. Each of the polyester raw materials was made into a chip shape.

[Synthesis of polyester raw material F]

As the polyester raw material F, mechanically recycled polyester raw material was prepared in accordance with the following procedure. Beverage PET bottles were washed to remove foreign matter such as beverage residue, and the washed bottles were crushed into flakes. The obtained flakes were washed by agitation under condition of a flake concentration of 10% by weight, a temperature of 85°C, and agitation time of 30 minutes in the presence of 3.5% by weight of sodium hydroxide solution. After alkali washing, the flakes were recovered and further washed with agitation under conditions of a flake concentration of 10% by weight, a temperature of 25°C, and agitation time of 20 minutes using distilled water. This washing step were repeated twice by changing the distilled water. After the wash with water, the flakes were dried, and then melted in an extruder. The small foreign matters were filtered out twice through filters sequentially changed to a finer eye-opening size. Upon the third filtration, the molten resin was filtered with a filter having the smallest eye-opening size of 50 $\mu$m, and the polyester resin F having an intrinsic viscosity of 0.69 dl/g and isophthalic acid content of 3.0 mol% was obtained.

[Synthesis of polyester raw material G]

As the polyester raw material G, chemically recycled polyester raw material was prepared in accordance with the following procedure.
A bale of separately collected PET bottles were fed into a wet grinder, followed by the addition of 500 g of liquid kitchen detergent diluted into 1,000 L of water, and the PET bottles were ground into flakes by circulation in a wet grinder. Then, metal pieces, sand, and glass pieces, which had high specific gravities, were removed by precipitation with a gravimetric separator connected to the grinder, and the flakes were recovered from the upper layer. The flakes were washed with pure water and centrifugally dehydrated to give recovered flakes.
The recovered flakes in an undried state were melted, then 30 kg of the melted flakes were charged into an autoclave equipped with an agitator, to be mixed with a mixed liquid of 150 kg of ethylene glycol and 150 g of zinc acetate dihydrate, which had been charged preheated in the autoclave. Then, fractions with lower boiling points than ethylene glycol such as water and acetic acid were distilled, and the resulting mixture was reacted at a temperature within a range of from 195°C to 200°C for 4 hours using a reflux condenser.
After the reaction was complete, the temperature of the content in the reaction chamber was lowered to 97°C to 98°C, and suspended solids and sediments were removed through a filter by hot filtration. The filtrate obtained through thermal filtration was further cooled, and it was confirmed that crude bis(2-hydroxyethyl) terephthalate (BHET) was completely dissolved in the filtrate. Then, the filtrate was subjected to pre-purification treatment by passing through an activated carbon bed at a temperature of from 50°C to 51°C, subsequently an anion/cation exchange mixed bed, for totally 30 minutes.
The resulting liquid after the above pre-purification treatment was charged into the autoclave equipped with an agitator again to distill off the excess ethylene glycol at atmospheric pressure by heating, and a concentrated melted liquid of BHET was obtained. The melted liquid of BHET thus obtained was allowed to cool naturally with agitation under nitrogen gas atmosphere and recovered from the autoclave to obtain a concentrated BHET chip block. The chip block was heated to 130°C again and melted, subsequently supplied to a thin film vacuum evaporator using a metering pump, then subjected to evaporation followed by cold condensation, resulting in purified BHET. The purified BHET was subjected to melt polymerization as a raw material, and a chemically recycled polyester resin G was obtained.

[Synthesis of polyester resins H and I for coating

The polyester resins H and I for coating, which have different monomer components with each other as shown in Table 1, were obtained in the same manner as the polyester raw material A. The polyester raw material were appropriately made into chip shapes.

[Table 1]

| Polyester raw materials | Raw material composition of polyesters (mol%) | | | | | | | | Amount of lubricant added (ppm) |
| | Acid components | | Polyol components | | | | | | |
| | TPA | IPA | EG | BD | NPG | CHDM | DEG | SA | |
|---|---|---|---|---|---|---|---|---|---|
| A | 100 | - | 62 | - | 26 | - | 12 | - | - |
| B | 100 | - | 68 | - | 30 | - | 2 | - | - |
| C | 100 | - | 68 | - | - | 30 | 1 | - | - |
| D | 100 | - | 99 | - | - | - | 1 | - | 7000 |
| E | 100 | - | - | 100 | - | - | - | - | - |
| F | 90 | 10 | 99 | - | - | - | 1 | - | - |
| G | 100 | - | 99 | - | - | - | 1 | - | - |
| H | 54 | 46 | 80 | - | 15 | - | - | 5 | - |
| I | 50 | 50 | 63 | - | 37 | - | - | - | - |

[Example 1]

Polyesters A, D, and F were mixed at a mass ratio of 80:8:12 and then supplied to an extruder. The resin mixture was melted at 280°C and extruded from a T-die, and the molten resin was rapidly cooled on a rotating metal cooling roll cooled at a surface temperature of 30°C to obtain an unstretched film having a thickness of approximately 250 μm.

The unstretched film was then introduced into a longitudinal stretching machine having rolls continuously arranged, and the film was stretched in the longitudinal direction using a speed difference between the rolls. In the longitudinal stretching, the rolls were classified into low-speed, slightly-low-speed, slightly-high-speed, and high-speed groups, and the longitudinal stretching zone was divided into three zones. In the zone between the low-speed and the slightly-low-speed (first stretching zone) and the zone between the slightly-low-speed and the slightly-high-speed (second stretching zone), the film pass line was set to be straight without holding a roll, and the film was kept by using a nip roll on the rolls. In the zone between the slightly-high-speed and the high-speed zone (third stretching zone), the film pass line was set to hold a roll and form a cross. The rolls were set so that the distance of the first stretching zone and the second stretching zone would become 200 mm, and the distance of the third stretching zone would become 120 mm. The film was longitudinally stretched at 85°C by 1.6 times in the first stretching zone, then stretched at 85°C by 1.7 times in the second stretching zone, and stretched at 90°C by 1.5 times in the third stretching zone. The total stretching ratio in the longitudinal direction was 4.1.

After the longitudinal stretching, the film was introduced into a heating furnace having heating means by far-infrared light, and the film was subjected to intermediate heat treatment. The temperature of the heating furnace was controlled at 130°C and the film was relaxed in the longitudinal direction by 40% using speed difference of inlet and outlet sides of rolls of heating furnace.

After the relaxing treatment, the film was introduced into a transverse stretching machine (tenter), then preheated to 130°C, and the film was transversely stretched in three stages provided with non-stretching zones (relaxing zone) between the stages as shown in FIG. 2. In the non-stretching zones, the clips were set parallel to the direction of travel. Specifically, the film was stretched at 100°C at a stretching rate of 30 %/sec by 1.5 times in the first stretching zone, then stretched at 95°C at a stretching rate of 30 %/sec by 1.6 times in the second stretching zone (stretching ratio in the second stretching zone, i.e., from the outlet of the first stretching zone to the outlet of the second stretching zone), and stretched at 93°C at a stretching rate of 15 %/sec by 1.7 times in the third stretching zone. The total stretching ratio in the transverse direction was 4.1 times. The film was then heat treated at 90°C in the final heat treatment zone.

The film was then introduced into a corona processing equipment and the film upper surface (surface F) was subjected to corona treatment at a treatment temperature of 40°C and an output of 0.3 kW.

After the treatment, both edges of the film were cut and removed, then the film with a width of 500 mm was wound into a roll for continuously producing a film with a thickness of 25 µm over a predetermined length, and the film of Example 1 was obtained. Production conditions of the film of Example 1 are shown in Table 2 and evaluation results of the film are shown in Table 3.

[Example 2]

A film was produced in the same manner as Example 1 except that the film production conditions were changed as shown in Table 2 and the corona treatment conducted in Example 1 was changed to coating. The film was coated by the method described below.

The polyester H and the polyester I were mixed at 80:20, and the mixture was dissolved into ethyl acetate by heating to give a coating liquid. Then, the coating liquid was applied to the bottom surface (surface B) of the film to form a coating layer with a thickness of 2 µm, and the film of Example 2 was obtained. Production conditions and evaluation results of the film of Example 2 are shown in Table 3.

[Examples 3 to 7 and Comparative Examples 1 to 4]

Films of Examples 3 to 7 and Comparative Examples 1 to 4 were produced under conditions described in Table 2. Evaluation results of the films produced in Examples 3 to 7 and Comparative Examples 1 to 4 are shown in Table 3.

[Table 2A]

| | | Example 1 | Example 2 | Example 3 | Example 4 | Example 5 | Example 6 |
|---|---|---|---|---|---|---|---|
| Raw material composition of films (% by mass) | Polyester A | 80 | 80 | 80 | 0 | 0 | 0 |
| | Polyester B | 0 | 0 | 0 | 0 | 76 | 0 |
| | Polyester C | 0 | 0 | 0 | 82 | 0 | 60 |
| | Polyester D | 8 | 8 | 8 | 8 | 6 | 5 |
| | Polyester E | 0 | 0 | 0 | 0 | 10 | 15 |
| | Polyester F | 12 | 12 | 12 | 10 | 0 | 0 |
| | Polyester G | 0 | 0 | 0 | 0 | 10 | 20 |
| **Amount of monomer** components (mol%) | Isophthalic acid | 1.2 | 1.2 | 1.2 | 1.0 | 0 | 0 |
| | Neopentyl glycol | 20.8 | 20.8 | 20.8 | 0 | 22.6 | 0.0 |
| | 1,4-Cyclohexanedimethanol | 0 | 0 | 0 | 24.6 | 0 | 18.0 |
| | Butanediol | 0 | 0 | 0 | 0 | 10.0 | 15.0 |
| | Diethylene glycol | 9.8 | 9.8 | 9.8 | 1.0 | 1.7 | 0.9 |
| Extrusion of raw material | Extrusion temperature (°C) | 280 | 300 | 265 | 280 | 270 | 280 |

(continued)

| | | Example 1 | Example 2 | Example 3 | Example 4 | Example 5 | Example 6 |
|---|---|---|---|---|---|---|---|
| Longitudinal stretching | First stretching zone | | | | | | |
| | Pass line | Straight | Straight | Straight | - | Straight | Straight |
| | Stretching distance (mm) | 200 | 250 | 300 | - | 200 | 200 |
| | Stretching temperature (°C) | 85 | 90 | 90 | - | 86 | 83 |
| | Stretching ratio | 1.6 | 1.6 | 2.2 | - | 1.6 | 2.2 |
| | Second stretching zone | | | | | | |
| | Pass line | Straight | Cross | Cross | - | Straight | Cross |
| | Stretching distance (mm) | 200 | 120 | 120 | - | 250 | 120 |
| | Stretching temperature (°C) | 86 | 90 | 92 | - | 86 | 87 |
| | Stretching ratio | 1.7 | 1.4 | 1.8 | - | 1.6 | 1.8 |
| | Third stretching zone | | | | | | |
| | Pass line | Cross | Straight | - | - | Cross | - |
| | Stretching distance (mm) | 120 | 200 | - | - | 120 | - |
| | Stretching temperature (°C) | 90 | 90 | - | - | 90 | - |
| | Stretching ratio | 1.6 | 1.7 | - | - | 1.5 | - |
| | Total stretching ratio (first stretching x second stretching × third stretching) | 4.1 | 3.8 | 4.0 | 1.0 | 3.8 | 4.0 |
| Intermediate heat treatment | Furnace temperature (°C) | 130 | 126 | 130 | - | 130 | 126 |
| | Relaxing rate (%) | 40 | 38 | 35 | - | 38 | 35 |

(continued)

| | | | Example 1 | Example 2 | Example 3 | Example 4 | Example 5 | Example 6 |
|---|---|---|---|---|---|---|---|---|
| Transverse stretching | Preheat | Temperature (°C) | 130 | 130 | 128 | 110 | 128 | 130 |
| | First stretching zone | Temperature (°C) | 100 | 95 | 108 | 95 | 95 | 92 |
| | | Stretching rate (%/sec) | 30 | 30 | 30 | 30 | 26 | 33 |
| | | Stretching ratio | 1.6 | 4.0 | 1.4 | 1.6 | 1.7 | 1.8 |
| | Relaxation zone | Temperature (°C) | 96 | - | 98 | 88 | 92 | 92 |
| | | Residence time (sec) | 2 | - | 2 | 3 | 2 | 2 |
| | Second stretching zone | Temperature (°C) | 95 | - | 98 | 88 | 90 | 92 |
| | | Stretching rate (%/sec) | 30 | - | 30 | 30 | 30 | 33 |
| | | Stretching ratio | 1.6 | - | 1.6 | 1.8 | 1.4 | 1.5 |
| | Relaxation zone | Temperature (°C) | 93 | - | 96 | 86 | 90 | 90 |
| | | Residence time (sec) | 2 | - | 2 | 3 | 2 | 2 |
| | Third stretching zone | Temperature (°C) | 93 | - | 96 | 86 | 90 | 90 |
| | | Stretching rate (%/sec) | 16 | - | 16 | 15 | 18 | 14 |
| | | Stretching ratio | 1.7 | - | 1.7 | 1.8 | 1.7 | 1.3 |
| | Total stretching ratio (first stretching × second stretching × third stretching) | | 4.1 | 4.0 | 3.8 | 5.2 | 4.0 | 3.5 |
| | Final heat treatment Temperature (°C) | | 90 | 90 | 110 | 96 | 96 | 88 |
| Area stretching ratio | Total ratio longitudinal direction × transverse direction | | 10.0 | 9.4 | 9.8 | 5.2 | 9.6 | 9.0 |
| Corona treatment | Treatment temperature (°C) | | 40 | 40 | 40 | 40 | 40 | 40 |
| | Output (kW) | | 0.3 | 0.1 | 0.2 | 0.2 | 0.2 | 0.2 |
| | Treatment surface | | F | F | F | F | F | F |
| Coating | Resin composition (% by mass) | Polyester H | - | 80 | - | - | - | - |
| | | Polyester I | - | 20 | - | - | - | - |
| | Thickness (μm) | | - | 2 | - | - | - | - |
| | Coating surface | | - | B | - | - | - | - |

(continued)

| | Example 1 | Example 2 | Example 3 | Example 4 | Example 5 | Example 6 |
|---|---|---|---|---|---|---|
| Film thickness (μm) | 25 | 22 | 40 | 26 | 25 | 30 |

[Table 2B]

| | | Example 7 | Comparative Example 1 | Comparative Example 2 | Comparative Example 3 | Comparative Example 4 |
|---|---|---|---|---|---|---|
| Raw material composition of films (% by mass) | Polyester A | 0 | 80 | 80 | 0 | 0 |
| | Polyester B | 0 | 0 | 0 | 0 | 76 |
| | Polyester C | 80 | 0 | 0 | 82 | 0 |
| | Polyester D | 6 | 8 | 8 | 8 | 5 |
| | Polyester E | 16 | 0 | 0 | 0 | 10 |
| | Polyester F | 0 | 12 | 12 | 10 | 0 |
| | Polyester G | 20 | 0 | 0 | 0 | 10 |
| Amount of monomer components (mol%) | Isophthalic acid | 0 | 1.2 | 1.2 | 1.0 | 0 |
| | Neopentyl glycol | 0.0 | 20.8 | 20.8 | 0 | 22.6 |
| | 1,4-Cyclohexanedimethanol | 18.0 | 0 | 0 | 24.6 | 0 |
| | Butanediol | 15.0 | 0 | 0 | 0 | 10.0 |
| | Diethylene glycol | 0.9 | 9.8 | 9.8 | 1.0 | 1.7 |
| Extrusion of raw material | Extrusion temperature (°C) | 280 | 280 | 280 | 280 | 270 |

| | | | Example 7 | Comparative Example 1 | Comparative Example 2 | Comparative Example 3 | Comparative Example 4 |
|---|---|---|---|---|---|---|---|
| Longitudinal stretching | First stretching zone | Pass line | Straight | Straight | Straight | - | Straight |
| | | Stretching distance (mm) | 200 | 200 | 200 | - | 200 |
| | | Stretching temperature (°C) | 81 | 85 | 85 | - | 85 |
| | | Stretching ratio | 1.1 | 1.6 | 1.6 | - | 1.6 |
| | Second stretching zone | Pass line | Cross | Straight | Straight | - | Straight |
| | | Stretching distance (mm) | 150 | 200 | 200 | - | 250 |
| | | Stretching temperature (°C) | 86 | 86 | 86 | - | 86 |
| | | Stretching ratio | 1.1 | 1.7 | 1.7 | - | 1.6 |
| | Third stretching zone | Pass line | - | Cross | Cross | - | Cross |
| | | Stretching distance (mm) | - | 120 | 120 | - | 120 |
| | | Stretching temperature (°C) | - | 90 | 90 | - | 90 |
| | | Stretching ratio | - | 1.5 | 1.5 | - | 1.5 |
| | Total stretching ratio (first stretching × second stretching × third stretching) | | 1.2 | 4.1 | 4.1 | 1.0 | 3.8 |
| Intermediate heat treatment | Furnace temperature (°C) | | - | 130 | 130 | - | 130 |
| | Relaxing rate (%) | | - | 40 | 40 | - | 38 |

EP 4 502 019 A1

24

| | | | Example 7 | Comparative Example 1 | Comparative Example 2 | Comparative Example 3 | Comparative Example 4 |
|---|---|---|---|---|---|---|---|
| Transverse stretching | Preheat | Temperature (°C) | 130 | 130 | 130 | 106 | 128 |
| | First stretching zone | Temperature (°C) | 92 | 100 | 100 | 100 | 96 |
| | | Stretching rate (%/sec) | 33 | 30 | 30 | 30 | 25 |
| | | Stretching ratio | 1.8 | 1.5 | 1.5 | 1.5 | 1.7 |
| | Relaxation zone | Temperature (°C) | 92 | 95 | 95 | 100 | 92 |
| | | Residence time (sec) | 2 | 2 | 2 | 3 | 2 |
| | Second stretching zone | Temperature (°C) | 92 | 95 | 95 | 100 | 90 |
| | | Stretching rate (%/sec) | 33 | 30 | 30 | 30 | 30 |
| | | Stretching ratio | 1.6 | 1.6 | 1.6 | 1.5 | 1.4 |
| | Relaxation zone | Temperature (°C) | 90 | 93 | 93 | 100 | 90 |
| | | Residence time (sec) | 2 | 2 | 2 | 3 | 2 |
| | Third stretching zone | Temperature (°C) | 90 | 93 | 93 | 100 | 90 |
| | | Stretching rate (%/sec) | 14 | 15 | 15 | 15 | 18 |
| | | Stretching ratio | 1.5 | 1.7 | 1.7 | 1.8 | 1.7 |
| | Total stretching ratio (first stretching × second stretching × third stretching) | | 4.3 | 4.1 | 4.1 | 4.1 | 40 |
| | Final heat treatment Temperature (°C) | | 88 | 90 | 90 | 130 | 96 |
| Area stretching ratio | Total ratio longitudinal direction × transverse direction | | 6.2 | 10.0 | 10.0 | 4.1 | 9.6 |
| Corona treatment | Treatment temperature (°C) | | 40 | - | 40 | 40 | 46 |
| | Output (kW) | | 0.2 | - | 0.3 | 0.3 | 0.4 |
| | Treatment surface | | F | - | F | F | F |
| Coating | Resin composition (% by mass) | Polyester H | - | - | - | - | 80 |
| | | Polyester I | - | - | - | - | 20 |
| | Thickness (μm) | | - | - | - | - | 2 |
| | Coating surface | | - | - | - | - | B |

| | Example 7 | Comparative Example 1 | Comparative Example 2 | Comparative Example 3 | Comparative Example 4 |
|---|---|---|---|---|---|
| Film thickness ($\mu$m) | 80 | 25 | 12 | 25 | 25 |

[Table 3]

| | | Example 1 | Example 2 | Example 3 | Example 4 | Example 6 | Example 6 | Example 7 | Comparative Example 1 | Comparative Example 2 | Comparative Example 3 | Comparative Example 4 |
|---|---|---|---|---|---|---|---|---|---|---|---|---|
| Film thickness ($\mu$m) | | 25 | 22 | 40 | 25 | 25 | 30 | 30 | 25 | 12 | 25 | 25 |
| Glass transition temperature Tg of film (°C) | | 66 | 66 | 66 | 73 | 68 | 63 | 63 | 66 | 66 | 72 | 68 |
| Intrinsic viscosity IV of film (dL/g) | | 0.62 | 0.69 | 0.70 | 0.68 | 0.65 | 0.64 | 0.64 | 0.62 | 0.62 | 0.68 | 0.65 |
| Wetting tension (mN/m) | Surface F | 52 | 42 | 47 | 49 | 51 | 50 | 49 | 36 | 53 | 49 | 57 |
| | Surface B | 36 | 36 | 36 | 36 | 36 | 36 | 36 | 36 | 36 | 36 | 36 |
| Percentage of oxygen atom present on film surface (%) | Surface F | 28.8 | 27.1 | 28.0 | 28.3 | 28.7 | 28.6 | 28.1 | 26.5 | 29.4 | 28.3 | 31.3 |
| | Surface B | 26.6 | 26.6 | 26.4 | 26.6 | 26.4 | 26.6 | 26.6 | 26.6 | 26.4 | 26.6 | 26.7 |
| Loop stiffness (mN/16mm) | Width direction | 14 | 8 | 187 | 17 | 16 | 42 | 44 | 14 | 2 | 16 | 19 |
| Hot water heat shrinkage ratio at 80°C (%) | Longitudinal direction | 5.4 | 4.1 | 7.7 | 0.2 | 5.1 | 4.6 | 5.2 | 4.0 | 6.2 | 1.2 | 0.4 |
| | Width direction | 42.1 | 37.1 | 22.0 | 66.3 | 46.3 | 61.7 | 63.3 | 40.4 | 46.6 | 13.5 | 55.0 |
| Heat seal strength at 140°C (N/16mm) | Width direction | 54 | 77 | 26 | 57 | 48 | 61 | 51 | 1 | 32 | 18 | 65 |
| Heat seal initiation temperature (°C) | Width direction | 120 | 130 | 126 | 126 | 120 | 120 | 126 | 160 | 116 | 126 | 96 |
| Maximum heat shrinkage stress (MPa) | Width direction | 12.2 | 16.1 | 8.9 | 16.3 | 13.1 | 14.4 | 15.5 | 12.9 | 12.2 | 6.3 | 5.5 |

EP 4 502 019 A1

(continued)

| | | Example 1 | Example 2 | Example 3 | Example 4 | Example 6 | Example 6 | Example 7 | Comparative Example 1 | Comparative Example 2 | Comparative Example 3 | Comparative Example 4 |
|---|---|---|---|---|---|---|---|---|---|---|---|---|
| Reversing heat capacity difference (J/g · K) | | 0.61 | 1.27 | 0.48 | 0.61 | 0.68 | 0.55 | 0.62 | 0.62 | 0.61 | 0.36 | 0.73 |
| Haze (%) | | 4.6 | 3.8 | 6.8 | 6.2 | 4.4 | 5.4 | 5.6 | 4.3 | 4.6 | 5.9 | 5.3 |
| Blocking resistance | | Good | Good | Good | Good | Good | Good | Good | Good | Good | Good | Bad |
| Attachment of film | | Good | Good | Good | Good | Good | Good | Good | Good | Bad | Good | Good |
| Shrinklage finishing property | Adhesion | Good | Good | Good | Good | Good | Good | Good | | Good | Bad | Good |
| | Peeling | Good | Good | Good | Good | Good | Good | Good | Bad | Good | Good | Good |

The films produced in Examples 1 to 7 satisfied the requirements of the present invention, and each of the films was a heat-shrinkable polyester film suitable as a banding label.

In contrast, the film produced in Comparative Example 1 had a low heat seal strength of 1, the heat sealed portion was peeled off when evaluating the shrinkage finishing property, and the shrinkage finishing property could not be evaluated. Due to the reason, the adhesion in the shrinkage finishing property is reshown as "-" in Table 3.

In Comparative Example 2, the film had a low loop stiffness of 2 mN/15mm, thereby causing film misalignment on a conveyor belt and thus low attachment.

The film of Comparative Example 3 had a low heat shrinkage ratio in the width direction, resulting in a heat-shrinkable polyester film having poor shrinkage finishing property.

The film of Comparative Example 4 had a high wetting tension of 57 mN/m, resulting in a heat-shrinkable polyester film having poor blocking resistance.

INDUSTRIAL APPLICABILITY

The heat-shrinkable polyester film of the present invention has the above characteristics; therefore, the film is suitable as a label.

**Claims**

1. A heat-shrinkable polyester film comprising an ethylene terephthalate unit as a main component, wherein the film satisfies the following requirements (1) to (4):

   (1) a loop stiffness in a width direction of the film is 6 mN/25mm or more and 200 mN/25mm or less;
   (2) a heat shrinkage ratio in the width direction of the film by immersion in hot water at 80°C for 10 seconds is 20% or more and 70% or less;
   (3) when one surface and the other surface of the film is heat sealed at a temperature of 140°C at a pressure of 0.1 MPa for 1 second, a strength by shear lap peeling test in the width direction of the film is 20 N/15mm or more and 80 N/15mm or less; and,
   (4) at least one topmost surface layer has a wetting tension of 40 mN/m or more and 55 mN/m or less.

2. The heat-shrinkable polyester film according to claim 1, wherein the film has a reversing heat capacity difference of 0.4 J/g·K or more and 1.4 J/g·K or less by measurement from 25°C to 140°C with a temperature-modulated differential scanning calorimeter.

3. The heat-shrinkable polyester film according to claim 1 or 2, wherein the at least one topmost surface of the film has a percentage of oxygen atom present on the film surface of 27% or more and 31% or less based on a peak intensity between 285 eV and 290 eV in a C1s spectrum by Electron Spectroscopy for Chemical Analysis.

4. The heat-shrinkable polyester film according to any one of claims 1 to 3, wherein the film has a thickness of 20 $\mu$m or more and 50 $\mu$m or less.

5. The heat-shrinkable polyester film according to any one of claims 1 to 4, wherein the film comprises one or more selected from the group consisting of isophthalic acid, neopentyl glycol, 1,4-cyclohexanedimethanol, butanediol, and diethylene glycol in an amount of 1 mol% or more and 30 mol% or less as a constituent component of a polyester for the film.

6. The heat-shrinkable polyester film according to any one of claims 1 to 5, wherein the film comprises a mechanically and/or chemically recycled polyester raw material from a collected PET bottle as a raw material for the film.

7. An annular label, comprising,

   the heat-shrinkable polyester film according to any one of claims 1 to 6 at least in part, and
   a bonded portion adhering the heat-shrinkable polyester film to itself, or the heat-shrinkable polyester film to another film,
   wherein a strength of the bonded portion by shear lap peeling test is 20 N/15mm or more and 80 N/15mm or less.

8. The annular label according to claim 7, wherein the bonded portion is heat sealed.

**9.** A packaged product comprising the annular label according to claim 7 or 8.

[FIG. 1]

[FIG. 2]

[FIG. 3]

Direction of shear lap peeling

Bonded portion

Direction of shear lap peeling

## INTERNATIONAL SEARCH REPORT

| International application No. |
| --- |
| **PCT/JP2023/009699** |

**A.    CLASSIFICATION OF SUBJECT MATTER**

*C08J 5/18*(2006.01)i; *B29C 61/06*(2006.01)i; *C08J 7/00*(2006.01)i; *C08J 7/052*(2020.01)i; *G09F 3/04*(2006.01)i
FI:    C08J5/18 CFD; B29C61/06; C08J7/00 302; C08J7/052; G09F3/04 C

According to International Patent Classification (IPC) or to both national classification and IPC

**B.    FIELDS SEARCHED**

Minimum documentation searched (classification system followed by classification symbols)

C08J5/18; B29C61/06; C08J7/00; C08J7/052; G09F3/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 61-64430 A (OKURA INDUSTRIAL CO., LTD.) 02 April 1986 (1986-04-02)<br>    entire text | 1-9 |
| A | JP 2021-127377 A (TOYOBO CO., LTD.) 02 September 2021 (2021-09-02)<br>    entire text | 1-9 |
| A | WO 2003/055937 A1 (TOYO BOSEKI KABUSHIKI KAISHA) 10 July 2003 (2003-07-10)<br>    entire text | 1-9 |
| A | JP 2004-339374 A (TOYO BOSEKI KABUSHIKI KAISHA) 02 December 2004<br>(2004-12-02)<br>    entire text | 1-9 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 June 2023** | **13 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
**Information on patent family members**

International application No.

**PCT/JP2023/009699**

| Patent document cited in search report | | | Publication date (day/month/year) | Patent family member(s) | | | Publication date (day/month/year) |
|---|---|---|---|---|---|---|---|
| JP | 61-64430 | A | 02 April 1986 | (Family: none) | | | |
| JP | 2021-127377 | A | 02 September 2021 | (Family: none) | | | |
| WO | 2003/055937 | A1 | 10 July 2003 | US | 2005/0095379 | A1 | |
| | | | | EP | 1460101 | A1 | |
| | | | | KR | 10-2004-0070285 | A | |
| | | | | CN | 1608097 | A | |
| JP | 2004-339374 | A | 02 December 2004 | (Family: none) | | | |

Form PCT/ISA/210 (patent family annex) (January 2015)

**REFERENCES CITED IN THE DESCRIPTION**

**Patent documents cited in the description**

- JP 4411556 B
- JP 6988440 B
- JP 2004139067 A

**Non-patent literature cited in the description**

- **A. MAHENDRASINGAM et al.** Effect of draw ratio and temperature on the strain induced crystallization of poly (ethylene terephthalate) at fast draw rates. *Polym.*, 1999, vol. 40, 5556